# EUROPÄISCHE PATENTANMELDUNG

(11) **EP 1 298 506 A1**
(43) Veröffentlichungstag der Anmeldung: **02.04.2003**
(21) Anmeldenummer: 01123168.5
(22) Anmeldetag: 27.09.2001
(51) Int. Cl.: G05B 19/042

(54) **Dynamischer Zugriff auf Automatisierungsressourcen**

(71) Anmelder: SIEMENS AKTIENGESELLSCHAFT, 80333 München (DE)
(72) Erfinder: Dinges, Clemens, 90587 Obermichelbach (DE); Schlereth, Michael, 91452 Wilhermsdorf (DE)

(57) **Zusammenfassung**

Es wird ein Verfahren zum dynamischen Zugriff auf Automatisierungsressourcen angegeben, wobei in einem verteilten Automatisierungssystem mit einer Anzahl von Automatisierungskomponenten eine erste Automatisierungskomponente (2), die eine Automatisierungsressource (10) sucht, eine Anfrage (8) in das Automatisierungssystem (1) richtet und auf diese Anfrage (8) von allen erreichbaren Automatisierungskomponenten (3 bis 7) eine Antwort (9) hinsichtlich verfügbarer geeigneter Automatisierungsressourcen (10) erhält und sodann diejenige Automatisierungskomponente (3 bis 7) mit der geeigneten Automatisierungsressource (10) auswählt und die Automatisierungsressource (10) verwendet.

## Beschreibung

Die Erfindung betrifft ein Verfahren zum Speichern, Wiederauffinden und Zuordnen von Daten in einem verteilten Automatisierungssystem und damit allgemeiner ein Verfahren zum dynamischen Zugriff auf Automatisierungsresourcen, denn auch ein Speicher oder ein im Speicher hinterlegter Datensatz wird im folgenden unter dem Oberbegriff Automatisierungsressource zusammengefasst.

Unter einem verteilten Automatisierungssystem wird im Folgenden ein Automatisierungssystem mit einer Anzahl von Automatisierungskomponenten verstanden, wobei jede Automatisierungskomponente zumindest mit einer anderen Automatisierungskomponente kommunikativ verbunden ist. Auf diese Weise ist jede Automatisierungskomponente von jeder anderen Automatisierungskomponente entweder mittelbar oder unmittelbar erreichbar. Die Verbindung zwischen den Automatisierungskomponenten ist z. B. über einen Feldbus realisiert. Gleichfalls ist es denkbar, dass einige oder alle Automatisierungskomponenten an das Internet oder ein lokales Derivat des Internets angeschlossen sind.

Bisher erfolgte das Speichern von Daten auch in einem verteilten Automatisierungssystem stets in einem Speicher, der der jeweiligen Automatisierungskomponente, an die die zu speichernden Daten geliefert werden, über eine explizite Zuordnung, z. B. eine so genannte Hardwarekonfiguration, zugewiesen ist. Üblicherweise erfolgt dabei das Speichern in einem auf der jeweiligen Automatisierungskomponente lokal vorgesehenen Speicher.

Gleichfalls bekannt ist ein zentraler Datenserver, der in einem Automatisierungssystem allen Beteiligten Automatisierungskomponenten zur zentralen Datenablage zugewiesen ist.

Eine Auswahl des Speicherorts zur Laufzeit anhand vorgegebener oder vorgebbarer Kriterien, wie z. B. die Erreichbarkeit des Speichers, dessen Schnelligkeit, die Sicherheit der gespeicherten Daten etc. ist derzeit nicht bekannt.

Die Aufgabe der Erfindung besteht darin, ein Verfahren zum dynamischen, d. h. mit Bezug auf bestimmte vorgebbare oder vorgegebene Parameter veränderlichen Zugriff auf Automatisierungsressourcen anzugeben.

Diese Aufgabe wird, soweit das Speichern von Daten betroffen ist, gelöst durch ein Verfahren gemäß Anspruch 1.

Danach ist vorgesehen, dass zum Speichern von Daten in einem Speicher in einem verteilten Automatisierungssystem mit einer Anzahl von Automatisierungskomponenten, wobei die Daten zunächst bei einer Automatisierungskomponente, einem Client, lokal gespeichert sind, die nachfolgenden Schritte ausgeführt werden:
- Zunächst richtet der Client eine Anfrage in das Automatisierungssystem. Unter einer Anfrage in das Automatisierungssystem wird verstanden, dass die Anfrage sukzessive von einer Automatisierungskomponente an jede mit dieser direkt verbundene weitere Automatisierungskomponente weitergeleitet wird. Der Client sendet also zunächst eine Anfrage an jede mit ihm direkt verbundene Automatisierungskomponente.
- Darauf leitet jede auf diese Weise erreichte Automatisierungskomponente die Anfrage an jede mit ihr direkt verbundene Automatisierungskomponente weiter. Jede auf diese Weise erreichte Automatisierungskomponente verfährt in gleicher Weise, bis entweder alle Automatisierungskomponenten im Automatisierungssystem erreicht sind oder die Laufzeit der Anfrage einen vorgegebenen oder vorgebbaren Schwellwert überschreitet.
- Im nächsten Verfahrensschritt sendet jede mit der Anfrage erreichte Automatisierungskomponente an den Client eine Antwort mit Teilinformationen betreffend den Speicher, auf den die jeweilige Automatisierungskomponente Zugriff hat. Zugriff hat eine Automatisierungskomponente dabei zumindest auf einen ihr lokal zugeordneten Speicher. Die Detailinformationen umfassen z. B. Informationen über Art und Größe des Speichers, z. B. eine Angabe der Speichergröße in K-Byte, eine Angabe über die Art des Speichers, z. B. ob es sich um einen flüchtigen oder einen nichtflüchtigen Speicher handelt. Darüber hinaus kann eine wichtige Detailinformation in einer Information über die Erreichbarkeit des Speichers bestehen, z. B. ob der Speicher permanent im Automatisierungssystem verfügbar ist, oder nur temporär oder mit welcher Datentransfergeschwindigkeit Daten in den Speicher geschrieben werden können oder Daten aus dem Speicher abgeholt werden können. Eine weitere wichtige zusätzliche oder alternative Detailinformation besteht in einer Information über die Sicherheit der gespeicherten Daten in dem jeweiligen Speicher, z. B. ob die Daten mit einer einfachen Parity-Information, einem Datensicherungs-Code z. B. in Form einer CRC-Signatur oder ähnlichem gesichert sind, oder ob der Speicher z. B. redundant ausgelegt ist oder ähnliches.
- Im letzten Verfahrensschritt wählt der Client anhand dieser oder ähnlicher Detailinformation einen Speicher aus und sendet die zu speichernden Daten an die entsprechende Automatisierungskomponente, die mittels des ihr möglichen Zugriffs auf den ausgewählten Speicher die empfangenen Daten in ausgewähltem Speicher einträgt. Denkbar ist auch, dass der Client die Daten direkt an den Speicher sendet. Dafür ist im Allgemeinen aber erforderlich, dass der Speicher im Automatisierungssystem direkt ansprechbar ist, so dass sich in einer Abstraktionsstufe, bei dem das Automatisierungssystem als Kollektion von Automatisierungskomponenten darstellt, auch dieser direkt erreichbare Speicher eine Automatisierungskomponente ist, deren einzige Funktionalität in dem Automatisierungssystem gerade im Speichern von Daten besteht. Somit bleibt es sich letztlich gleich, ob der Client die Daten an eine Automatisierungskomponente sendet und diese die Daten dann in den durch sie erreichbaren Speicher einträgt, oder ob er die Daten an eine spezielle Automatisierungskomponente sendet, die im Automatisierungssystem lediglich oder im Wesentlichen als Speicher fungiert.

Die Erfindung wird, soweit das Wiederauffinden und Abrufen von Daten betroffen ist, durch ein Verfahren gemäß Anspruch 2 gelöst.

Dafür ist gemäß der Erfindung vorgesehen, dass zum Ankoppeln einer Automatisierungskomponente, im Folgenden als Neukomponente bezeichnet, an ein verteiltes Automatisierungssystem mit einer Anzahl von Automatisierungskomponenten, von denen mindestens eine Zugriff auf in einen Speicher gespeicherte Konfigurationsdaten mit mindestens einem Konfigurationsdatensatz hat, die nachfolgend aufgeführten Schritte ausgeführt werden. Dabei werden als Konfigurationsdaten sämtliche zum Betrieb einer Automatisierungskomponente und/oder des Automatisierungssystems insgesamt erforderlichen oder nützlichen Daten verstanden. Zusammengehörige Daten werden dabei zum erleichterten Zugriff zusammengefasst. Eine derartige Zusammenfassung zusammengehöriger Daten wird im Folgenden als Datensatz bezeichnet. Ein Datensatz umfasst dabei z. B. eine Adresse, über die die jeweilige Automatisierungskomponente im verteilten Automatisierungssystem erreichbar ist. Weitere Parameter dieses Datensatzes können sich auf die Zugriffsart, z. B. die Übertragungsgeschwindigkeit, Datensicherungseilverfahren etc. beziehen.

Im ersten Verfahrensschritt richtet die Neukomponente eine Anfrage bezüglich benötigter Konfigurationsdaten in das Automatisierungssystem. Die Anfrage wird - wie oben beschrieben - im Automatisierungssystem sukzessive weitergereicht. Benötigte Konfigurationsdaten können dabei z. B. ein Datensatz mit den oben beschriebenen Daten zur Parametrierung einer Kommunikationsverbindung aber auch ein Manual oder ein Ausschnitt aus einem Manual, das einem Bediener die manuelle Parametrierung der jeweiligen Automatisierungskomponente ermöglicht, sein.

Im nächsten Verfahrensschritt sendet jede mit der Anfrage erreichte Automatisierungskomponente an die Neukomponente eine Antwort mit Detailinformationen betreffend die Konfigurationsdaten, auf welche die jeweilige Automatisierungskomponente Zugriff hat. Nach Beendigung dieses Verfahrensschrittes hat die Neukomponente eine umfassende Information über die im Automatisierungssystem hinterlegten Daten und/oder über die im Automatisierungssystem verfügbaren Dienste, wobei Daten und Dienste im Folgenden zusammenfassend als Konfigurationsdatensatz bezeichnet werden. Damit ist das Verfahren gemäß Anspruch 2 nicht auf das Ankoppeln von Neukomponenten, d. h. die Komponenten, die zuvor nicht im Automatisierungssystem betrieben wurden, beschränkt, sondern kann sich in gleicher Weise auf bereits zum Automatisierungssystem gehörige Automatisierungskomponenten angewandt werden, für die ein Konfigurationsdatensatz gemäß der obigen Terminologie benötigt wird, der bis zu dem Zeitpunkt des Auftretens dieses Erfordernisses an der jeweiligen Automatisierungskomponente nicht vorhanden oder durch diese nicht direkt erreichbar war. Die Detailinformationen betreffend die Konfigurationsdaten sind hier z. B. Informationen, ob es sich bei dem betreffenden Konfigurationsdatensatz um einen Datensatz handelt, der Daten zur Parametrierung einer Kommunikationsverbindung enthält, ob es sich um einen Datensatz handelt, der Daten enthält, die als Manual oder Teil eines Manuals darstellbar sind, in welcher Sprache das Manual abgefasst ist, etc. Des Weiteren kann ein Konfigurationsdatensatz auch Daten enthalten, die ein Programm mit einer bestimmten Funktionalität, wie z. B. ein Engineeringsystem, eine Komponente eines Engineeringsystems, ein Editor etc. darstellen.

In einem letzten Verfahrensschritt wertet die Komponente anhand der Detailinformationen einen Konfigurationsdatensatz aus, fordert diesen bei der entsprechenden Automatisierungskomponente an und speichert den Konfigurationsdatensatz nach Erhalt in einem Konfigurationsdatenspeicher.

Gemäß einer vorteilhaften Ausgestaltung kann eines der Verfahren gemäß Anspruch 1 und Anspruch 2 einen besonders benutzerfreundlichen Wechsel einer der Automatisierungskomponenten eines verteilten Automatisierungssystems ermöglichen. Die zu wechselnde Automatisierungskomponente wird im Folgenden als Altkomponente, die Automatisierungskomponente, die die Altkomponente ersetzen soll, als Neukomponente bezeichnet.

Zum Austausch der Altkomponente gegen die Neukomponente speichert zunächst die Altkomponente ihre Daten, also Konfigurationsdaten und/oder Programmdaten und/oder Daten, die Stati eines durch das Automatisierungssystem gesteuerten und/oder überwachten technischen Prozesses darstellen, und/oder Beschreibungsdaten, wie technische Dokumentation, Manuals, Kommentierungen und Programmdaten etc. entsprechend dem Verfahren nach Anspruch 1 in einem Speicher des Automatisierungssystems ab.

Daraufhin wird die Altkomponente gegen die Neukomponente ausgetauscht. Die Neukomponente verfügt zum Zeitpunkt ihres erstmaligen Anschlusses an das Automatisierungssystem zumindest über eine Funktionalität, die es ihr ermöglicht, eine kommunikative Verbindung zu anderen Automatisierungskomponenten aufzubauen. Mit dieser Funktionalität sucht und übernimmt die Neukomponente die von der Altkomponente gespeicherten Daten entsprechend dem Verfahren nach Anspruch 2.

Das Verfahren gemäß Anspruch 3 kann durch die Betätigung eines entsprechenden Schaltelementes, z. B. eines an der Automatisierungskomponente vorgesehenen Tasters, eingeleitet werden. Die Betätigung des Tasters signalisiert für die jeweilige Automatisierungskomponente, dass ihre Entfernung aus dem Automatisierungssystem unmittelbar bevorsteht. Entsprechend leitet diese Automatisierungskomponente eine Sicherung der auf ihr gespeicherten Daten in dem verteilten Automatisierungssystem in der oben beschriebenen Art und Weise ein. Der Abschluss dieses Verfahrensschrittes kann an der Automatisierungskomponente durch ein Anzeigeelement dargestellt werden. Als Anzeigeelement kommt z. B. eine zweifarbige LED in Frage, die durch eine erste Farbe signalisiert, dass das Sichern der Daten gerade durchgeführt wird, und durch Farbumschlag signalisiert, dass die Datensicherung abgeschlossen ist und die Automatisierungskomponente damit aus dem Automatisierungssystem entfernt werden kann, ohne dass die darin enthaltenen Daten für das Automatisierungssystem verloren wären. Analog kann z. B. auch das Entfernen der Automatisierungskomponente aus dem Automatisierungssystem durch eine aktivierte Verriegelung, z. B. eine elektromagnetische Verriegelung der Kommunikationsschnittstelle so lange verhindert werden, bis die Datensicherung erfolgreich abgeschlossen ist.

Das Wiederauffinden eines im Automatisierungssystem gespeicherten Konfigurationsdatensatzes wird erleichtert, wenn jeder Konfigurationsdatensatz mit einer Konfigurationsdatensatzkennung versehen ist, anhand derer die Eignung des Konfigurationsdatensatzes für die Neukomponente feststellbar ist. Die Konfigurationsdatensatzkennung kann z. B. eine Typenbezeichnung solcher Automatisierungskomponenten umfassen, die den Konfigurationsdatensatz verwenden können. Dies ist insbesondere für Konfigurationsdatensätze vorteilhaft, die technische Dokumentationen, oder Manuals, oder Teile desselben enthalten. Da es Konfigurationsdatensätze dieser Art gibt, die für unterschiedliche Automatisierungskomponenten mit jedoch noch grundsätzlich vergleichbarer Funktionalität geeignet sind, z. B. Automatisierungskomponenten zur Analogeingabe, bei denen eine erste Automatisierungskomponente Analogdaten im Bereich von Null bis +5V und eine zweite Automatisierungskomponente Analogdaten im Bereich 0 bis 20 mA verarbeiten kann, ist es günstig, wenn bei einer entsprechenden Anfrage solcher Automatisierungskomponenten Detailinformationen zurückgeliefert werden, die den Zugriff von Automatisierungskomponente sowohl der ersten als auch der zweiten Art auf diese Konfigurationsdaten ermöglichen. Gleichfalls denkbar ist, dass die Konfigurationsdatensatzkennung eine Seriennummer oder eine ähnlich vergleichbare eindeutige Referenzierung derjenigen Automatisierungskomponente, die die Daten gespeichert hat, enthält, so dass, wenn die Automatisierungskomponente temporär aus dem Automatisierungssystem entfernt wird und zu einem späteren Zeitpunkt an das Automatisierungssystem wieder angeschlossen wird, diese Automatisierungskomponente wieder auf genau die Daten zugreifen kann, die ihr zu dem Zeitpunkt, zu dem sie das letzte Mal an das Automatisierungssystem angeschlossen war, zur Verfügung standen.

Damit die Neukomponente eindeutig die Daten auffinden kann, die die Altkomponente vor ihrer Entfernung aus dem Automatisierungssystem gespeichert hat, ist vorteilhaft vorgesehen, dass für jede Automatisierungskomponente eine vorgegebene oder generierbare Konfigurationskennung vorgesehen ist, die z. B. aus besonders signifikanten Positionen der Typenbezeichnung der betreffenden Automatisierungskomponente gebildet wird, oder die mit Bezug auf die selbst bereits eindeutige Adresse der Altkomponente in dem Automatisierungssystem, die von der Neukomponente übernommen wird, gebildet wird, oder indem sie mit Bezug auf die geographische Position der Altkomponente in dem Automatisierungssystem, die ja auch von der Neukomponente eingenommen wird, gebildet wird. Die Eignung eines Konfigurationsdatensatzes für die Neukomponente kann dann durch einen Vergleich derjenigen Konfigurationskennung, die für die Neukomponente vorgegeben ist, oder die die Neukomponente selbst generiert, mit der Konfigurationsdatensatzkennung, die der Konfigurationskennung entspricht, die von der Altkomponente den Konfigurationsdatensatz hinzugefügt wurde, festgestellt werden. Hier wäre selbstverständlich nicht die Identität zwischen Konfigurationskennung und Konfigurationsdatensatzkennung erforderlich, sondern es reichte aus, dass Konfigurationskennung und Konfigurationsdatensatzkennung hinsichtlich bestimmter vorgegebener und vorgebbarer Charakteristika eine hinreichende Übereinstimmung aufweisen.

Anstelle der Konfigurationsdatensatzkennung kann zusätzlich oder alternativ zusammen mit den zu speichernden Daten ein Bezeichner abgespeichert werden, wobei der Bezeichner vorteilhaft eine schnelle Identifikation der Daten ermöglicht. Weiter vorteilhaft kann der Bezeichner mit Bezug auf eine Position und/oder eine Adresse des Clients im Automatisierungssystem gebildet werden, so dass auch eine Selektion von Daten anhand der Struktur des Automatisierungssystems oder anhand der Position der jeweiligen Automatisierungskomponente möglich ist.

Nachfolgend wird ein Ausführungsbeispiel der Erfindung anhand der Figuren erläutert.

Darin zeigt
- FIG 1: ein Automatisierungssystem,
- FIG 2: eine Automatisierungskomponente,
- FIG 3: eine Anfrage seitens eines Clients in das Automatisierungssystem,
- FIG 4: eine Antwort der Automatisierungskomponenten auf die Anfrage an den Client und
- FIG 5: das Ablegen von Daten durch den Client in einer anhand der Antwort ausgewählten Automatisierungskomponente.

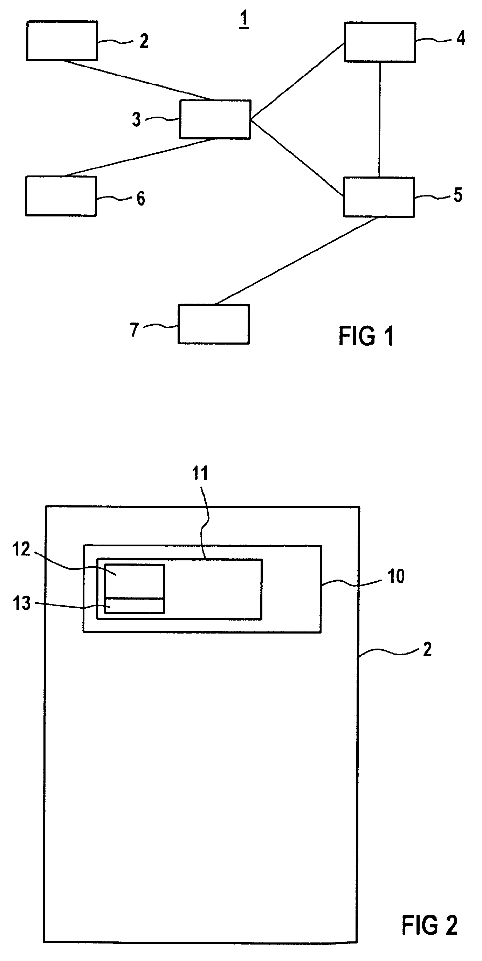

FIG 1 zeigt ein Automatisierungssystem 1 mit Automatisierungskomponenten 2, 3, 4, 5, 6, 7. Die Automatisierungskomponenten 2 bis 7 sind untereinander kommunikativ verbunden, wie durch die Linienverbindungen ersichtlich ist. Die kommunikative Verbindung zwischen den einzelnen Automatisierungskomponenten 2 bis 7 ist z.B. ein lokales Bussystem wie z.B. ein so genannter Feldbus oder auch ganz oder teilweise Verbindungen im so genannten Internet oder einem lokalen Derivat des Internets, einem so genannten Intranet.

FIG 2 zeigt exemplarisch eine Automatisierungskomponente 2, die im Folgenden auch als Client 2 bezeichnet wird. Die Automatisierungskomponente 2 umfasst neben der üblichen Funktionalität zumindest einen Speicher 10, in dem Daten, insbesondere Konfigurationsdaten 11, gespeichert sind. Die Konfigurationsdaten 11 umfassen mindestens einen Konfigurationsdatensatz 12, wobei ein solcher Konfigurationsdatensatz 12 mit einer Konfigurationsdatensatzkennung 13 oder einem Bezeichner 13 versehen ist.

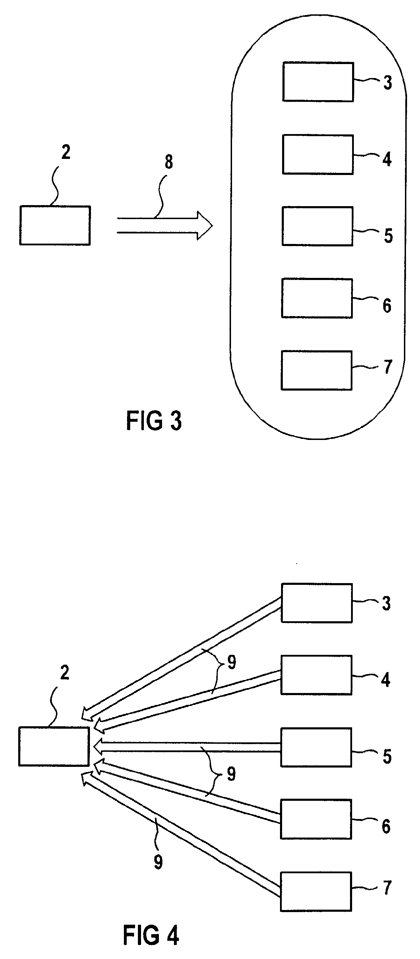

FIG 3 zeigt schematisch eine Anfrage 8, die seitens des Clients 2 in das "Rest"-Automatisierungssystem, gebildet aus den Automatisierungskomponenten 3, 4, 5, 6, 7, gerichtet wird. Diese Anfrage gelangt an die jeweilige Automatisierungskomponente 3 bis 7 über die jeweiligen Kommunikationsverbindungen.

FIG 4 zeigt exemplarisch, dass jede Automatisierungskomponente 3 bis 7, die von der Anfrage 8 erreicht wurde, auf diese Anfrage 8 mit einer Antwort 9 reagiert. Wenn die Anfrage 8 eine Anfrage nach einem geeigneten Speicherort 10 für auf dem Client 2 gespeicherte Daten 11 war, enthält die Antwort 9 Detailinformationen hinsichtlich auf den jeweiligen Automatisierungskomponenten 3 bis 7 verfügbaren Speichers 10. Anhand der jeweiligen Antworten 9 wählt der Client 2 diejenige Automatisierungskomponente 3 bis 7 aus, die zur Speicherung der Daten 11 am besten geeignet ist.

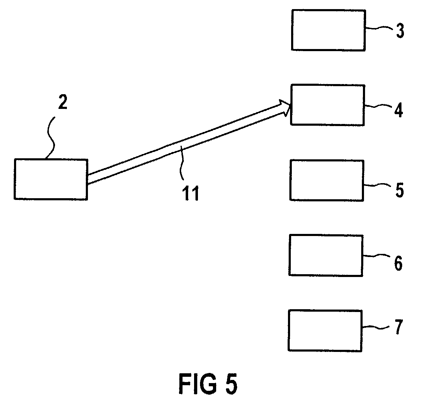

FIG 5 zeigt dazu schematisch den Transfer der Daten 11 vom Client 2 an eine ausgewählte Automatisierungskomponente 4 aus den Automatisierungskomponenten 3 bis 7.

Die in FIG 2 dargestellte schematische Struktur der Automatisierungskomponente 2 gilt analog auch für alle anderen Automatisierungskomponenten 3 bis 7. Insofern erfolgt beim Speichern von Daten 11 in einer anderen Automatisierungskomponente 3 bis 7 ein Transfer der Daten 11 aus dem Speicher 10 des Clients 2 in den entsprechenden Speicher 10 der Zielautomatisierungskomponente.

## Patentansprüche

1. Verfahren zum Speichern von Daten (11) in einem Speicher (10) in einem verteilten Automatisierungssystem (1) mit einer Anzahl von Automatisierungskomponenten (2, 3, 4, 5, 6, 7), wobei die Daten (11) zunächst bei einer Automatisierungskomponente (2), einem Client (2), lokal gespeichert sind, mit den Schritten
a.) der Client (2) richtet eine Anfrage (8) in das Automatisierungssystem (1),
b.) jede mit der Anfrage (8) erreichte Automatisierungskomponente (3 bis 7) sendet an den Client eine Antwort (9) mit Detailinformationen betreffend den Speicher (10), auf den die jeweilige Automatisierungskomponente (3 bis 7) Zugriff hat,
c.) der Client (2) wählt anhand der Detailinformationen einen Speicher (10) aus und sendet die zu speichernden Daten (11) an die entsprechende Automatisierungskomponente (3 bis 7).

2. Verfahren zum Ankoppeln einer Automatisierungskomponente (2), einer Neukomponente (2), an ein verteiltes Automatisierungssystem (1) mit einer Anzahl von Automatisierungskomponenten (3, 4, 5, 6, 7) von denen mindestens eine Zugriff auf in einem Speicher (10) gespeicherte Konfigurationsdaten (11) mit mindestens einem Konfigurationsdatensatz (12) hat, mit den Schritten
d.) die Neukomponente (2) richtet eine Anfrage (9) bezüglich benötigter Konfigurationsdaten (11) in das Automatisierungssystem (1),
e.) jede mit der Anfrage erreichte Automatisierungskomponente (3 bis 7) sendet an die Neukomponente (2) eine Antwort (9) mit Detailinformationen betreffend die Konfigurationsdaten (11), auf welche die jeweilige Automatisierungskomponente (3 bis 7) Zugriff hat,
f.) die Neukomponente (2) wählt anhand der Detailinformationen einen Konfigurationsdatensatz (12) aus, fordert diesen bei der entsprechenden Automatisierungskomponente (3 bis 7) an und speichert den Konfigurationsdatensatz (12) nach Erhalt in einem Konfigurationsdatenspeicher (10).

3. Verfahren zum Wechsel einer Automatisierungskomponente (3 bis 7), einer Altkomponente (2), gegen eine Neukomponente (2), in einem verteilten Automatisierungssystem (1) mit den Schritten:
g.) die Altkomponente (2) speichert ihre Daten (2) entsprechend dem Verfahren nach Anspruch 1 in einem Speicher (10) des Automatisierungssystems (1),
h.) die Altkomponente (2) wird gegen die Neukomponente (2) ausgetauscht,
i.) die Neukomponente (2) sucht und übernimmt die von der Altkomponente (2) gespeicherten Daten entsprechend dem Verfahren nach Anspruch 2.

4. Verfahren nach Anspruch 2 oder 3, wobei der oder jeder Konfigurationsdatensatz (12) mit einer Konfigurationsdatensatzkennung (13) versehen ist, anhand derer die Eignung des Konfigurationsdatensatzes (12) für die Neukomponente (2) feststellbar ist.

5. Verfahren nach Anspruch 4, wobei für jede Automatisierungskomponente (2 bis 7) eine vorgegebene oder generierbare Konfigurationskennung vorgesehen ist und wobei die Eignung des Konfigurationsdatensatzes (12) für die Neukomponente (2) durch einen Vergleich von Konfigurationskennung und Konfigurationsdatensatzkennung (13) feststellbar ist.

6. Verfahren nach einem der obigen Ansprüche, wobei die zu speichernden Daten (11) zusammen mit einem Bezeichner (13) abgespeichert werden.

7. Verfahren nach Anspruch 6, wobei der Bezeichner (13) mit Bezug auf eine Position und/oder eine Adresse des Clients (2) im Automatisierungssystem (1) gebildet wird.
